**Europäisches Patentamt**

**European Patent Office**

**Office européen des brevets**

(11) Veröffentlichungsnummer: **0 245 845 B1**

(12) **EUROPÄISCHE PATENTSCHRIFT**

(45) Veröffentlichungstag der Patentschrift: **10.03.93**

(21) Anmeldenummer: **87106893.8**

(22) Anmeldetag: **12.05.87**

(51) Int. Cl.5: **C12G 3/08**

(54) **Verfahren zur Herstellung von alkoholarmen oder alkoholfreien Bieren.**

(30) Priorität: **13.05.86 DE 3616093**

(43) Veröffentlichungstag der Anmeldung:
**19.11.87 Patentblatt 87/47**

(45) Bekanntmachung des Hinweises auf die
Patenterteilung:
**10.03.93 Patentblatt 93/10**

(84) Benannte Vertragsstaaten:
**AT BE CH DE ES FR GB GR IT LI LU NL SE**

(56) Entgegenhaltungen:
**CH-A- 602 025**
**GB-A- 135 785**
**GB-A- 2 084 607**
**US-A- 1 493 757**
**US-A- 1 598 601**

(73) Patentinhaber: **Holsten-Brauerei AG**
**Postfach 50 07 49 Holstenstrasse 224**
**W-2000 Hamburg 50(DE)**

(72) Erfinder: **Dziondziak, Klaus, Dr.**
**Datumer Chaussee 106**
**W-2080 Pinneberg(DE)**

(74) Vertreter: **Vossius & Partner**
**Siebertstrasse 4 P.O. Box 86 07 67**
**W-8000 München 86 (DE)**

**Beschreibung**

Die Erfindung betrifft ein Verfahren zur Herstellung von alkoholarmen oder alkoholfreien Bieren.

Es sind bereits zahlreiche Verfahren zur Herstellung von alkoholarmen und alkoholfreien Bieren bekannt. Zu diesem Zweck kann einem nach herkömmlichen Brauverfahren hergestellten Bier mit normalen Alkoholgehalt nachträglich wenigstens ein Teil des Alkohols entzogen werden. Das in der DE-A-14 42 238 beschriebene Verfahren dieser Art sieht ein Abdampfen des Alkohols in einem Dünnschichtverdampfer bei Temperaturen unterhalb von 70°C vor. Aus der DE-A- 12 66 266 ist ein ähnliches Verfahren bekannt, bei welchem das Bier zunächst einer Zerstäubungsverdampfung im Vakuum und dann anschließend einer Dünnschichtverdampfung im Vakuum unterworfen und der Rückstand rückverschnitten und mit Kohlensäure imprägniert wird.

Aus der DE-A-24 05 543 und der DE-A-721 249 sind ferner Verfahren zur adsorbtiven Alkoholentfernung aus Bier bekannt. Ein Verfahren zur Herstellung von alkoholarmen Bier durch Umkehrosmose ist in der DE-A-23 23 094 offenbart.

Schließlich wurden auch Verfahren vorgeschlagen, bei denen der Alkohol in der Sudpfanne ausgekocht wird.

Andererseits wurden Verfahren zur Herstellung von alkoholarmen und alkoholfreien Bieren entwickelt, die von vornherein eine verminderte Alkoholbildung während des Herstellungsprozesses vorsehen. Dies wird entweder dadurch erreicht, daß man mit Hefen arbeitet, die die Bierwürze nur unvollkommen vergären können, oder man reprimiert bzw. unterbricht die Gärung; vgl. DE-A-520 363 und DE-A-728 871.

US-A-1 493 757 offenbart ein Verfahren zur Entalkoholisierung von Bier, wobei dieses in einem geschlossenen System mit einem warmen Inertgas behandelt wird. Anschließend wird das Gas abgekühlt, wobei der absorbierte Alkohol freigesetzt wird, und wieder mit dem Bier in Kontakt gebracht. Dabei werden dem Bier gewünschte Bestandteile wieder zugeführt, die zusammen mit dem Alkohol entfernt worden sind.

Insgesamt haftet den genannten Verfahren der Nachteil an, daß die daraus gewonnenen alkoholarmen oder alkoholfreien Biere geschmacklich nicht normalen alkoholhaltigen Bieren entsprechen. Die nachträglich entalkoholisierten Biere schmekken leer und unharmonisch, während die Biere, bei denen von vornherein die Alkoholbildung ausgeschlossen bzw. vermindert wurde, einen typischen unangenehmen Bierwürzgeschmack aufweisen. Hinzu kommt noch, daß die verwendeten Entalkoholisierungsverfahren sehr aufwendig und störanfällig sind.

Der Erfindung liegt die Aufgabe zugrunde, ein Verfahren zur Herstellung von alkoholarmen oder alkoholfreien Bieren zu schaffen, das die Erzeugung von alkoholarmen oder alkoholfreien Bieren ermöglicht, die geschmacklich normalen alkoholhaltigen Bieren gleichwertig sind. Eine weitere Aufgabe der Erfindung ist die Bereitstellung eines Verfahrens zur Erzeugung von alkoholarmen oder alkoholfreien Bieren, das kontinuierlich durchgeführt werden kann, nicht störungsanfällig ist und in zuverlässiger Weise hervorragendes alkoholarmes oder alkoholfreies Bier liefert.

Diese Aufgaben werden durch den überraschenden Befund gelöst, daß es möglich ist, den Alkohol aus einem alkoholhaltigen Bier über ein Desorptionsverfahren unter Verwendung eines Gases zu entfernen. Im Verfahren der Erfindung wird der durch die Entfernung des Alkohols bedingte Geschmacksverlust des Biers durch Stoffe ausgeglichen, die den Geschmack des Bieres verbessern.

Das Behandlungsverfahren der Erfindung ist ein aerober Prozess, der mit hefefreiem Bier durchgeführt werden kann. In einer besonderen Ausführungsform kann das der Alkohol-Desorptionsbehandlung unterzogene Bier Hefe enthalten. Durch den aeroben Metabolismus der Hefe wird ein Teil des vorhandenen Äthanols verbraucht. Außerdem werden die schädlichen Wirkungen des gegebenenfalls für das Desorptionsverfahren eingesetzten Sauerstoffs durch die reduzierende Wirkung der Hefe ausgeglichen.

Gegenstand der Erfindung ist somit ein Verfahren zur Herstellung von alkoholarmen oder alkoholfreien Bieren, das dadurch gekennzeichnet ist, daß man zur Desorption des Alkohols ein Gas durch ein alkoholhaltiges Bier leitet und den dabei auftretenden Geschmacksverlust des Bieres durch Stoffe ausgleicht, die den Geschmack des Bieres verbessern, wobei diese Stoffe entweder, bei Einsatz eines teilweise fermentierten Jungbieres, in dem Bier in Form eines Restgehaltes an vergärbaren Substanzen enthalten sind, oder, bei Einsatz eines vollständig vergorenen Bieres, in Form von Bierwürze, Kräusen oder Zucker zugesetzt werden.

Nach einer zweiten Ausführungsform ist Gegenstand der Erfindung ein Verfahren zur Herstellung von alkoholarmen oder alkoholfreien Bieren, das dadurch gekennzeichnet ist, daß man zur Desorption des Alkohols ein Saüerstoff enthaltendes Gas durch ein alkoholhaltiges, eine Hefe enthaltendes Bier leitet und den dabei auftretenden Geschmacksverlust des Bieres durch Stoffe ausgleicht, die den Geschmack des Bieres verbessern, und wobei die Hefe neben einem weiteren Alkohol-Abbau eine Umwandlung der fermentierbaren Stoffe in biertypische Aromastofe bewirkt.

2

Die Hefe, die gegebenenfalls in dem Bier während des Desorptionsprozesses anwesend sein kann, verwertet einen Teil der gegebenenfalls vorhandenen fermentierbaren Stoffe unter Erzeugung von biertypischen Aromastoffen. Gleichzeitig baut die Hefe einen weiteren Anteil des vorhandenen Äthanols ab. Als "alkoholarm" wird hier in Übereinstimmung mit den einschlägigen deutschen Vorschriften ein Bier mit einem Gehalt von 0,5 bis 1,5 Gewichtsprozent Äthanol verstanden. Als "alkoholfrei" wird ein Bier mit einem Äthanolgehalt von unter 0,5, vorzugsweise unter 0,1, insbesondere unter 0,05 Gewichtsprozent (Nachweisgrenze) bezeichnet.

Im Verfahren der Erfindung wird zur Desorption des Alkohols aus dem alkoholhaltigen Bier durch dieses ein Gas geleitet. Die Desorption des Alkohols verläuft dabei in der Art einer Zweiphasen-Destillation.

Zur Desorption des Alkohols kann im Verfahren der Erfindung beispielsweise Luft eingesetzt werden. Überraschenderweise hat sich nämlich herausgestellt, daß der in der Luft enthaltene Sauerstoff die Qualität des Bieres nicht beeinträchtigt, sofern bestimmte Grenzen der Behandlungsbedingungen eingehalten werden.

Neben Luft eignen sich als Behandlungsgase im Verfahren der Erfindung auch Kohlendioxid und andere inerte Gase.

Die Desorptionsbehandlung wird im Verfahren der Erfindung bei einer Temperatur von 15 bis 50°C, vorzugsweise 20 bis 40°C und insbesondere 25 bis 35°C durchgeführt. Die Dauer der Behandlung hängt von der Temperatur und der Ausgestaltung der verwendeten Apparatur ab. Unter technisch sinnvollen Bedingungen dauert die Behandlung mindestens etwa 1 Minute. Bei kontinuierlicher Verfahrensführung ist eine Dauer von 5 bis 20 Minuten, insbesondere 10 bis 15 Minuten bevorzugt. In diskontinuierlichen Verfahren dauert die Behandlung gewöhnlich länger, beispielsweise 45 bis 180 Minuten.

Der Geschmacksverlust, der im Bier im Verlauf der Desorptionsbehandlung auftritt, wird im Verfahren der Erfindung durch Stoffe ausgeglichen, die den Geschmack von Bier verbessern. Solche Stoffe können entweder bereits in dem zu behandelnden Bier vorhanden sein oder können ihm gezielt zugesetzt werden. Im Verfahren der Erfindung kann deshalb beispielsweise ein nur teilweise fermentiertes Jungbier eingesetzt werden, das noch einen Restgehalt an fermentierbaren Stoffen enthält.

Diese Stoffe können entweder selbst das sensorische Defizit ausgleichen, oder sie werden durch den Stoffwechsel der Hefe - falls das Verfahren in Gegenwart einer Hefe durchgeführt wird - in biertypische Aromastoffe umgewandelt.

In einer anderen Ausführungsform ist das der Behandlung unterzogene alkoholhaltige Bier ein vollständig durchgegorenes Bier, dem vergärbare Stoffe gezielt zugesetzt werden. Dieser Zusatz der geschmacksverbessernden Stoffe kann entweder vor, während oder nach der Desorptionsbehandlung erfolgen. Spezielle Beispiele für geeignete vergärbare Stoffe, die den Geschmack von Bier verbessern, sind Bierwürze, Kräusen oder Zucker. Der Zusatz von Kräusen ist besonders bevorzugt. In einer insbesondere bevorzugten Ausführungsform wird der Kräusen dem alkoholfreien Bier nach der Desorptionsbehandlung zugesetzt.

Wenn ein Bier mit einer Restmenge an fermentierbaren Stoffen der Behandlung nach dem Verfahren der Erfindung unterzogen wird, oder wenn fermentierbare Stoffe dem Bier vor oder während der Behandlung zugesetzt werden, soll der Gehalt an diesen fermentierbaren Stoffen im Bier 0,25 bis 2,0, vorzugsweise 0,25 bis 1,8, insbesondere 1,2 bis 1,75 Gewichtsprozent betragen. In Gegenwart von Hefe führt die aerobe Behandlung nicht zu einer vollständigen Verwertung der fermentierbaren Stoffe durch die Hefe; die Behandlung wird vielmehr bis zu einem Restgehalt an fermentierbaren Stoffen von 1,2 bis 1,75, vorzugsweise 1,4 bis 1,7 Gewichtsprozent durchgeführt. Als besonders günstig hat es sich erwiesen, wenn das behandelte Bier die Stoffe, die den Geschmacksverlust im Bier ausgleichen und seinen Geschmack verbessern sollen, in solchem Ausmaß enthält oder diesem zugesetzt werden, daß ein Anstieg des Extraktgehaltes des behandelten Biers von 0,3 bis 2,0, vorzugsweise 0,8 bis 1,8 und insbesondere von 1,2 bis 1,7 Gewichtsprozent im Vergleich zum Extraktgehalt des Ausgangsbieres erreicht wird.

In einer bevorzugten Ausführungsform wird zur Desorption des Alkohols ein mit Wasserdampf gesättigtes Gas verwendet. Dadurch wird erreicht, daß aus dem Bier selektiv Äthanol desorbiert, jedoch kein Wasser und kaum sensorisch relevante Stoffe. Das zur Desorption des Alkohols verwendete Gas, das vorzugsweise mit Wasserdampf gesättigte Luft ist, wird in einer weiteren bevorzugten Ausführungsform nach Abtrennung des desorbierten Äthanols im Kreislauf erneut zur Desorptionsbehandlung des Bieres verwendet. Dies hat den Vorteil, daß das im Kreislauf geführte Gas auch mit flüchtigen Aromastoffen des Bieres gesättigt bzw. angereichert werden kann, so daß die weitere Desorption dieser erwünschten Stoffe aus dem Bier verringert wird. Die Entfernung des Äthanols aus dem im Kreislauf geführten Gas kann beispielsweise durch Kältetrocknung oder andere übliche Verfahren erfolgen. Ferner können dem rezirkulierten Gas biertypische Aromastoffe zugesetzt werden. Auf diese Weise wird eine unerwünschte Desorption von Aromastoffen aus dem Bier verhindert.

Der Hauptgrund für den Geschmacksverlust des Bieres ist die Entfernung des Alkohols. Zum Ausgleich dafür schlägt das Verfahren der Erfindung den Zusatz von Stoffen zu dem Bier vor, die die sensorischen Eigenschaften (Geschmack und Geruch) von Bier verbessern. Kräusen ist dabei bevorzugter geschmacksverbessernder Zusatzstoff. Kräusen ist eine angegorene Bierwürze mit einem mittleren echten Vergärungsgrad von 1 bis 35 %. Der im Verfahren der Erfindung verwendete Kräusen hat gewöhnlich einen Vergärungsgrad von 4 bis 25, vorzugsweise 6 bis 8 %.

In einer Ausführungsform kann das Verfahren der Erfindung mit einem Bier durchgeführt werden, das Hefe enthält. Die Hefe kann dem Bier für diesen Zweck gezielt zugesetzt werden. Es kann jedoch auch ein Bier verwendet werden, das Restmengen Hefe aus der Gärung enthält, beispielsweise ein vergorenes Bier, das sich in der Stufe der Lagerung befindet (Lagerkeller-Bier). Die Menge der verwendeten Hefe ist nicht kritisch; 0.2 bis 40 x $10^6$ Zellen/ml sind bevorzugt. Ein Lagerkellerbier hat vorzugsweise einen Hefegehalt von etwa 0,5 bis 2 x $10^6$ Zellen/ml.

Die von der Hefe verursachte teilweise Umwandlung der fermentierbaren Stoffe erzeugt biertypische Aromastoffe, die den auf den Abbau oder die Verdampfung des Äthanols zurückzuführenden Geschmacksverlust ausgleichen. Dies ist von besonderer Bedeutet, wenn die fermentierbaren Stoffe Bierwürze oder Zukker sind. Wenn dagegen als fermentierbarer Stoff Kräusen verwendet wird, spielt die metabolische Erzeugung von biertypischen Aromastoffen durch die Hefe keine so wichtige Rolle, da der Kräusen die erforderlichen biertypischen Aromastoffe bereits enthält.

In einer Ausführungsform der Erfindung kann die aerobe Behandlung des alkoholhaltigen Bieres somit in Gegenwart einer Hefe, jedoch ohne fermentierbare Stoffe im Bier durchgeführt werden. Bei dieser Ausführungsform der Erfindung gelangen die biertypischen Aromastoffe, die für den vollmundigen Geschmack eines alkoholarmen oder alkoholfreien Bieres wünschwenswert sind, durch den Zusatz von Kräusen nach Durchführung der aeroben Behandlung in das Bier.

Die Art der bei der aeroben Behandlung verwendeten Hefe ist nicht besonders kritisch. Die Hefe muß allerdings bei der gewählten Behandlungstemperatur lebensfähig sein, wobei jedoch zu bemerken ist, daß die Behandlung im Vergleich zu einem Gärungsprozeß in verhältnismäßig kurzer Zeit durchgeführt wird. Da Hefen bei erhöhter Temperatur in der Regel nicht sofort absterben, können im Verfahren der Erfindung auch Hefen eingesetzt werden, die die gewählte Verfahrenstemperatur zumindest eine gewisse Zeit aushalten.

Im Verfahren der Erfindung können Hefen der Gattung Saccaromyces eingesetzt werden. Bevorzugt sind dabei Hefen der Art Saccaromyces rouxii, wobei sich insbesondere die Hefestämme S. rouxii DSM 2531 oder DSM 70535 bewährt haben.

Das Verfahren der Erfindung kann in einem Reaktor durchgeführt werden. Der Reaktor kann eine offene Bütte sein, sollte aber vorzugsweise ein Behälter sein, der den hygienischen Anforderungen Rechnung trägt. Er darf im Inneren keine Kondensationsbereiche für die sich in der durchgesetzten Luft befindlichen Flüssigkeitsanteile besitzen. Er kann auch als in sich geschlossenes System konstruiert sein, bei dem die durchgesetzte Gasmenge ständig durch ein geeignetes Trocknungssystem von der mitgeführten Flüssigkeitsmenge befreit wird (z.B. Kältetrocknung).

Bei Vorhandensein eines entsprechenden Luftverteilersystems anderer Bauarten soll der Reaktor ein günstiges Oberflächen-Volumenverhältnis garantieren. Obwohl dieses in Abhängigkeit von der eingebrachten Luftmenge prinzipiell weit variiert werden kann, sollte es aber zur Vermeidung von starken Turbulenzen und einer nicht mehr beherrschbaren Schaumbildung so sein, daß im Reaktor eine Flüssigkeitshöhe von 100, vorzugsweise 35 mm, nicht überschritten wird. In einem Reaktor dieser Art beträgt die Behandlungsdauer vorzugsweise zwischen 45 und 180 Minuten.

Die benötigte Luftmenge ist abhängig von der Temperatur, der Füllhöhe des Reaktors und dem Feuchtigkeitsgehalt der Luft vor und nach dem Durchströmen der Flüssigkeitsschicht.

Da man aus bereits dargestellten Gründen sinnvollerweise mit geringen Flüssigkeitsfüllhöhen arbeiten sollte, empfiehlt es sich unter großtechnischen Bedingungen, eine Anordnung einer Batterie solcher Flachbettreaktoren übereinander vorzunehmen, weil bei einer Füllhöhe von 100 mm eine Gesamthöhe der einzelnen Reaktoren von nur 200 bis 300 mm erforderlich ist.

Eine weitere Möglichkeit der Prozeßführung besteht in der Verwendung kontinuierlicher Reaktorsysteme bekannter Bauart, in denen Luft und Flüssigkeit im Gegenstromverfahren geführt werden.

Das so behandelte Bier wird dann vorzugsweise sofort auf Lagertemperatur gekühlt, rückverdünnt und sofort durch $CO_2$-Wäsche von noch vorhandenen Sauerstoffresten befreit, aufcarbonisiert und noch einige Tage kalt gelagert, um es danach in der für die Bierherstellung üblichen Weise weiter zu behandeln. Die Verfahrensführung sowie die Kombination von aerober Behandlung mit Hefen, die unter diesen Bedingungen vermehrt Äthanol verwerten und dabei keine bieruntypischen Geschmacks- und Geruchsstoffe bilden, speziell Hefen der Gattung Saccharomyces, vorzugsweise der Art S. rouxii, insbesondere der DSM-Stämme

4

2531 und 70535, mit der mehrtätigen Kaltlagerung garantiert die weitgehende Kompensation der nach dem Verdunstungsprozess vorlorengegangenen biertypischen Aroma- und Geschmacksstoffe.

Eine Definition der biertypischen Aroma- und Geschmacksstoffe ist eindeutig in der bekannten wissenschaftlichen Literatur gegeben (Narziß, L., Abriß der Bierbrauerei, Verlag F. Enke, Stuttgart, 1980; Jäger, P.; Mitteilungen der Versuchsstation für das Gärungsgewerbe in Wien, Nr. 9/10, 1983, S. 100 bis 106; Nr. 11/12, S. 130 bis 133; Nr. 1/2, 1984, S. 4 bis 8, Nr. 3/4, S. 43 bis 46).

Um nach dem Verfahren der Erfindung ein alkoholarmes Bier herzustellen, kann man einerseits das gewonnene alkoholfreie Bier mit einer Menge an normalem Bier verschneiden, die der gewünschten Alkoholkonzentration entspricht. Andererseits ist es auch möglich, das Verfahren nur soweit zu treiben, daß der gewünschte Alkoholgehalt im aerob behandelten Bier noch verbleibt.

Die nach dem Verfahren hergestellten alkoholarmen oder alkoholfreien Biere wurden in mehreren Verkostungen eines zehnköpfigen Experten-Verkostergremiums als den Vergleichsbieren, die Biere Pilsener Brauart waren, völlig gleichwertig erkannt. Ebenso schnitten sie bei Verkostungen gegen im Handel befindliche alkoholarme Biere signifikant besser ab. Während letztere Biere im Charakter als bieruntypisch bezeichnet wurden, konnten die nach dem Verfahren der Erfindung hergestellten Biere als biertypisch bzw. bieridentisch ausgewiesen werden.

Im folgenden werden bevorzugte Ausführungsformen des Verfahrens der Erfindung anhand von Beispielen weiter erläutert.

Beispiel 1

Ein endvergorenes Bier Pilsener Brauart wird in kontinuierlicher Verfahrensführung in einer Siebbodenkolonne entalkoholisiert und geschmacklich harmonisiert. Dabei zeigt sich, daß im kontinuierlichen Betrieb neben einem bedeutend geringeren apparativen Aufwand auch kürzere Reaktionszeiten bei vergleichbarem Mengendurchsatz gegenüber einem absatzweise betriebenen Reaktor erzielt werden.

a) Aufbau und Wirkungsweise der kontinuierlichen Versuchsanlage

Die Zentraleinheit der Anlage ist eine Siebbodenkolonne mit fünf keramischen Siebböden und zwei seitlich angebrachten Ein- bzw. Überläufen. Die Kolonne ist im Siebbodenbereich zylindrisch und läuft unterhalb des Lufteinlaufstutzens konisch aus.

Der Durchmesser beträgt 150 mm, der Abstand der Kolonnenböden zueinander jeweils 200 mm. Die Gesamthöhe liegt bei 1750 mm. Jeder Siebboden verfügt über etwa 85 runde Sieböffnungen eines Durchmessers von etwa 3 mm. Der Überlauf befindet sich jeweils in einer Höhe von etwa 25 mm über dem Siebboden. Die Kolonne mit den Meßeinrichtungen (Strömungsmesser für Luft und Flüssigkeit) ist in einen Stahlrohrrahmen eingehängt.

Die von einem Gebläse gelieferte Luft wird über eine elektrische Heizeinrichtung geführt und gelangt seitlich unter den ersten Kolonnenboden (Anschlußleistung 2,5 kW). Das zu behandelnde Bier wird aus einem Lager-Drucktank unter $CO_2$-Druck über die obersten Einläufe auf den obersten Kolonnenboden geführt. Die von unten nach oben strömende Luft verhindert den Durchtritt der Flüssigkeit durch die Sieböffnung, so daß sich dieselbe nur nach Erreichen der Überläufe zum jeweils darunter liegenden Kolonnenboden bewegen kann. Auf den einzelnen Kolonnenböden entstehen Wirbelschichten, die einen intensiven Stoffaustausch garantieren. Nach Passieren des letzten Kolonnenbodens gelangt die Flüssigkeit in den Kolonnenkonus. Das entalkoholisierte Bier wird aus dem in der Konusspitze befindlichen Ablaß periodisch in einen Lagertank abgepumpt und mit $CO_2$ begast.

b) Versuchsbedingungen und Ergebnisse

Die Anlage wird unter folgenden Versuchsbedingungen betrieben:

| | |
|---|---|
| - Zusatz von in üblicher Weise inaktiviertem Kräusen (Stammwürzegehalt: 12 %, wirklicher Vergärungsgrad: 8 %) | 320 ml/l Bier |
| - Vorlauftemperatur des Bier-Reaktionsgemisches (Bier-/Kräusen-Gemisch) | 20°C |
| - Vorlaufdruck des Bierreaktionsgemisches | 1 - 1,2 bar |
| - Temperatur der einströmenden Heißluft | 170°C |
| - Luftdurchsatz (bezogen auf Raumtemperatur) | 40 m$^3$/h |
| - Durchsatz an Bierreaktionsgemisch | 6 - 10 l/h |
| - Temperatur des Bier-Reaktionsgemisches im Grenzflächenbereich | 37 - 40°C |
| - Verweilzeit des Bierreaktionsgemisches im Reaktor | 12 Min bei 8 l/h |

c) Sensorische Beurteilung der Biere

Die durch das kontinuierliche Verfahren gewonnenen Biere erfuhren eine eindeutig bessere Beurteilung als Vergleichsbiere. In mehreren Verkostungen wurden verschiedene Chargen so gewonnener alkoholfreier und alkoholarmer Biere mit normalen und alkoholfreien Marktbieren verglichen. Dabei konnten folgende grundsätzliche Feststellungen gemacht werden:

- Die Versuchsbiere kommen einem normalen Bier in der Qualität sehr nahe; teilweise wurde das alkoholarme Bier sogar für das Bezugsbier gehalten bzw. besser bewertet.
- Der Unterschied zwischen dem alkoholfreien und dem alkoholarmen Bier untereinander ist gering.
- Die alkoholfreien Marktbiere wurden signifikant als wesentlich schlechter als die Versuchsbiere beurteilt.

Beispiel 2

Desorption von Alkohol in kontinuierlicher Verfahrensführung mit Wasserdampf-gesättigter Luft

Die in Beispiel 1 beschriebene Siebbodenkolonnen-Anlage wurde auf einen Betrieb mit Wasserdampf-gesättigter Luft umgerüstet.

Voraussetzung für diesen Betrieb sind isotherme Verhältnisse: Die Wasserdampf-gesättigte Luft und das einlaufende Bierreaktionsgemisch müssen die gleiche Temperatur aufweisen und diese Temperatur sollte auch während des Desorptionsverfahrens im wesentlichen aufrechterhalten werden.

Wenn die Lufttemperatur - wie in den Versuchen mit ungesättigter Luft - sehr hoch gehalten wird, um damit das Bierreaktionsgemisch erst auf die gewünschte Reaktionstemperatur zu bringen, kühlt sich dadurch zwangsläufig die Luft während des Verfahrens ab und der Wasserdampf kondensiert. Damit würde das fertige Bier den Reaktor verdünnt verlassen. Wenn andererseits die Temperatur des einlaufenden Bierreaktionsgemisches höher ist als die Temperatur der Wasserdampf-gesättigten Luft, ist mit einem gewissen Wasserverlust des Bieres zu rechnen.

Zur Herstellung isothermer Verhältnisse wurde die Anlage von Beispiel 1 wie folgt modifiziert.

- Zwischen dem Lagertank mit dem kalten Bierreaktionsgemisch (Kräusen und endgelagertes Bier einer Temperatur von 2 - 3 °C) und der Kolonne wurde ein Durchflußerhitzer zur Erwärmung des Gemisches im Durchfluß auf Reaktionstemperatur vorgesehen.
- Aus einem durch einen Bunsenbrenner erhitzten Dampftopf wurde Wasserdampf in den Luftstrom geleitet. Dabei wurde die Wasserdampfmenge so gesteuert, daß die Luft ohne das zusätzliche elektrische Heizaggregat einerseits auf Reaktionstemperatur gebracht und andererseits mit Wasserdampf gesättigt wurde.

Zur Vermeidung einer Abkühlung der Kuft im Zuströmkanal bzw. des Reaktionsgemisches in der Kolonne wurden diese Aggregate nach außen hin isoliert.

Der Wassergehalt der Ausgangsluft lag je nach der relativen Luftfeuchtigkeit und der Temperatur zwischen 8 und 16 g/Nm$^3$. Bei einer Reaktionstemperatur von 38°C und völliger Sättigung beträgt die Konzentration dagegen etwa 54 g/Nm$^3$, so daß eine Wasseraufnahme zwischen 38 und 46 g/Nm$^3$

erforderlich ist. Bei einer Behandlungsmenge von etwa 5,7 Nm$^3$ Luft pro Liter Bierreaktionsgemisch ergibt sich eine Menge von 217 bis 262 ml einzubringenden Wassers. Diese Wassermenge entspricht sehr genau der Wasser-Desorptionsrate (Verdunstungsmenge) beim Arbeiten mit ungesättigter Luft. Daraus ist zu erkennen, daß bei Einhaltung dieser Bedingungen eine selektive Entalkoholisierung erfolgt: Bei genauer Temperaturführung zeigte das aus der Kolonne ausfließende Bier gegenüber dem einfließenden Reaktionsgemisch lediglich den Volumenverlust, der durch den eliminierten Alkohol bedingt war (3,5 - 4 Vol. %).

Der Vorteil dieser Verfahrensführung liegt einerseits darin, das entalkoholisierte Bier nicht mehr zurückverdünnen zu müssen. Andererseits wirkt sich die im wesentlichen nur noch auf den Alkohol bezogene Verdunstungsrate qualitätsschonend auf das Bier aus, da das kolloidale Gefüge des Bieres weniger stark verändert und der Aromaabtrag insgesamt reduziert wird.

Zusätzlich zu diesen Vorteilen bietet dieses Verfahren die Möglichkeit, neben der Sättigung der Durchsatzluft mit Wasser auch eine Anreicherung bzw. Sättigung derselben mit leichtflüchtigen Bieraromastoffen vorzunehmen, um entsprechend theoretischer Gleichgewichtszustände das Bier weitergehend vor Aromaverlusten zu bewahren.

**Beispiel 3**

Beispiel 2 wird in großtechnischem Maßstab in einer Anlage mit einer Leistung von 10 hl/h bei 7100 Nm$^3$ Luft wiederholt. Die Temperatur der gesättigten Luft und des Biergemisches beträgt 40°C. Zur Erhöhung des Extraktgehaltes des Ausgangsbieres um 1,65 Gewichtsprozent wird Kräusen in der in Beispiel 1 angegebenen Menge zugesetzt.

**Beispiel 4**

Ein endvergorenes Bier Pilsener Brauart wird in einem Reaktor folgender Ausführung entalkoholisiert und geschmacklich harmonisiert.

Zylindrische Bütte in doppelwandiger Ausführung zur Beheizung mit Warmwasser

Durchmesser     600 mm

Höhe            300 mm

Ringsrohrbelüftungssystem.

Der Reaktor wird chargenweise mit 21,25 Liter des zu behandelnden Bieres befüllt, mit einer Hefe versetzt (S. rouxii, DSM 2531; 20 x 10$^6$ Zellen/ml) und mit einer Luftmenge von ca. 30 m$^3$/h belüftet. Durch die doppelwandige Ausführung des Reaktors und die vorgewärmte Luft werden das zu behandelnde, ebenfalls vorgewärmte Bier sowie alle Wandungsteile des Reaktors auf 35°C gehalten.

Nach einer Belüftungszeit von 15 Minuten werden 3,75 Liter ebenfalls auf 35°C vorgewärmte Anstellwürze mit einem Stammwürzegehalt von 12 % aufgelassen und bis auf einen Gehalt des Bieres von 0,0 % Alkohol weiterbelüftet (ca. 75 Minuten). Nach dieser Zeit wird das Bier abgepumpt, auf Lagertemperatur abgekühlt, in ein Lagergefäß geleitet, auf Ausgangsvolumen mit karbonisiertem Wasser aufgefüllt rekarbonisiert. Nach 3 bis 4 Tagen wird das Bier filtriert und abgefüllt.

Folgende Daten stehen sich gegenüber:

Alle Prozentangaben stellen Gewichtsprozente dar

|                          | Ausgangsbier | Endbier |
|--------------------------|:------------:|---------|
| Stammwürze (%)           | 12           | 12 (steuerrechtlich) |
| wirklicher Extrakt (%)   | 4            | 5(1 % vergärbarer Extrakt) |
| scheinbarer Extrakt (%)  | 2            | 5       |
| Alkohol (%)              | 4            | 0       |

Das Endbier unterscheidet sich sensorisch nur unwesentlich vom Ausgangsbier.

**Beispiel 5**

Aus dem im Beispiel 1 hergestellten alkoholfreien Bier wird nach folgendem Verfahren ein alkoholarmes Bier hergestellt.

65 Teile des alkoholfreien Bieres werden mit 35 Teilen des für die Herstellung des alkoholfreien Bieres verwendeten Ausgangsbieres verschnitten, so daß im Verschnittbier ein Alkoholgehalt von ca. 1,4 Gew.-% resultiert.

Das Bier unterscheidet sich ebenfalls nur unwesentlich vom alkoholhaltigen Ausgangsbier.

**Patentansprüche**

1. Verfahren zur Herstellung von alkoholarmen oder alkoholfreien Bieren, dadurch gekennzeichnet, daß man zur Desorption des Alkohols ein Gas durch ein alkoholhaltiges Bier leitet und den dabei auftretenden Geschmacksverlust des Bieres durch Stoffe ausgleicht, die den Geschmack des Bieres verbessern, wobei diese Stoffe entweder bei Einsatz eines teilweise fermentierten Jungbieres in dem Bier in Form eines Restgehaltes an vergärbaren Substanzen enthalten sind, oder bei Einsatz eines vollständig vergorenen Bieres dem Bier in Form von Bierwürze, Kräusen oder Zucker zugesetzt werden.

2. Verfahren zur Herstellung von alkoholarmen oder alkoholfreien Bieren, dadurch gekennzeichnet, daß man zur Desorption des Alkohols ein Saüerstoff enthaltendes Gas durch ein alkoholhaltiges, eine Hefe enthaltendes Bier leitet und den dabei auftretenden Geschmacksverlust des Bieres durch Stoffe ausgleicht, die den Geschmack des Bieres verbessern, wobei diese Stoffe entweder bei Einsatz eines teilweise fermentierten Jungbieres in dem Bier in Form eines Restgehaltes an vergärbaren Substanzen enthalten sind, oder bei Einsatz eines vollständig vergorenen Bieres dem Bier in Form von Bierwürze, Kräusen oder Zucker zugesetzt werden, und wobei die Hefe neben einem weiteren Alkohol-Abbau eine Umwandlung der fermentierbaren Stoffe in biertypische Aromastoffe bewirkt.

3. Verfahren nach Anspruch 1, dadurch gekennzeichnet, daß man als Gas Luft oder ein Inertgas verwendet.

4. Verfahren nach Anspruch 3, dadurch gekennzeichnet, daß man als Inertgas Kohlendioxid verwendet.

5. Verfahren nach Anspruch 2, dadurch gekennzeichnet, daß mal als Sauerstoff enthaltendes Gas Luft verwendet.

6. Verfahren nach einem der Ansprüche 1 oder 2, dadurch gekennzeichnet, daß man die Desorption des Alkohols bei einer Temperatur von 15 bis 50 °C durchführt.

7. Verfahren nach einem der Ansprüche 1 oder 2, dadurch gekennzeichnet, daß man das Gas bei diskontinuierlicher Behandlungsführung 45 bis 180 Minuten, bei kontinuierlicher Behandlungsführung 5 bis 20 Minuten durch das alkoholhaltige Bier leitet.

8. Verfahren nach einem der Ansprüche 1 oder 2, dadurch gekennzeichnet, daß man ein Bier mit einem Gehalt von 0,25 bis 1,80 Gewichtsprozent vergärbare Substanzen der aeroben Behandlung unterzieht.

9. Verfahren nach Anspruch 8, dadurch gekennzeichnet, daß man die aerobe Behandlung im Fall eines hefehaltigen Bieres bis zu einem Restgehalt an vergärbaren Substanzen von 1,2 bis 1,75 Gewichtsprozent durchführt.

10. Verfahren nach einem der Ansprüche 1 oder 2, dadurch gekennzeichnet, daß man dem Bier die den Geschmack verbessernden Stoffe vor, während oder nach der Desorptionsbehandlung zusetzt.

11. Verfahren nach einem der Ansprüche 1 oder 2, dadurch gekennzeichnet, daß man als den Geschmack verbessernden Stoff Kräusen verwendet.

12. Verfahren nach Anspruch 11, dadurch gekennzeichnet, daß man den Kräusen dem Bier nach der Desorptionsbehandlung zusetzt.

EP 0 245 845 B1

**13.** Verfahren nach einem der Ansprüche 1 oder 2, dadurch gekennzeichnet, daß man die den Geschmack verbessernden Stoffe in einer Menge verwendet, die zu einer Erhöhung des Extraktgehaltes des Bieres um 0,3 bis 2,0 Gewichtsprozent führt.

**14.** Verfahren nach einem der Ansprüche 1 oder 2, dadurch gekennzeichnet, daß man die Desorption des Alkohols mit Hilfe eines mit Wasserdampf gesättigten Gases durchführt.

**15.** Verfahren nach einem der Ansprüche 1 oder 2, dadurch gekennzeichnet, daß man das zur Desorption des Alkohols verwendete Gas nach der Abtrennung des aus dem Bier desorbierten Alkohols im Kreislauf zur Behandlung des Bieres zurückführt.

**16.** Verfahren nach einem der Ansprüche 1 oder 2, dadurch gekennzeichnet, daß man die Desorption des Alkohols kontinuierlich durchführt.

**17.** Verfahren nach Anspruch 14, dadurch gekennzeichnet, daß man die kontinuierliche Desorption des Alkohols in einer Siebbodenkolonne durchführt.

**18.** Verfahren nach Anspruch 2, dadurch gekennzeichnet, daß man ein Lagerkellerbier verwendet, das eine Restmenge der im Gärungsverfahren verwendeten Hefe enthält.

**19.** Verfahren nach Anspruch 18, dadurch gekennzeichnet, daß man das erhaltene alkoholarme oder alkoholfreie Bier 2 bis 4 Tage an einem kühlen Ort lagert.

**Claims**

**1.** A method for the production of low-alcohol or alcohol-free beer, characterised in that a gas is lead through alcoholic beer in order to desorb the alcohol, the involved loss of taste in the beer being compensated for via substances which improve the taste thereof, these substances - when a partially fermented green beer is used - being contained in the beer in the form of a residual amount of fermentable substances, or - when a completely fermented beer is used - being added to the beer in form of wort, krausen or sugar.

**2.** A method for the production of low-alcohol or alcohol-free beer, characterised in that an oxygen-containing gas is lead through alcoholic, yeast-containing beer in order to desorb the alcohol, the involved loss of taste in the beer being compensated for via substances which improve the taste thereof, these substances - when a partially fermented green beer is used - being contained in the beer in the form of a residual amount of fermentable substances, or - when a completely fermented beer is used - being added to the beer in form of wort, krausen or sugar, and the yeast not only effecting a further fermentation of the alcohol but also a conversion of the fermentable substances into aromatic substances typical of beer.

**3.** The method according to claim 1, characterised in that the gas is either air or an inert gas.

**4.** The method according to claim 3, characterised in that the inert gas is carbon dioxide.

**5.** The method according to claim 2, characterised in that air is used as the oxygen-containing gas.

**6.** The method according to claim 1 or 2, characterised in that the desorption of the alcohol is carried out at a temperature of 15 to 50°C.

**7.** The method according to claim 1 or 2, characterised in that the gas is lead through the alcoholic beer for 45 to 180 minutes in discontinuous treatment and for 5 to 20 minutes in continuous treatment.

**8.** The method according to claim 1 or 2, characterised in that beer having 0.25 to 1.80 % by weight of fermentable substances is subjected to aerobic treatment.

**9.** The method according to claim 8, characterised in that the aerobic treatment in the case of a beer containing yeast is carried out until the residual amount of the fermentable substances is 1.2 to 1.75 %

9

by weight.

10. The method according to claim 1 or 2, characterised in that the taste-improving substances are added to the beer either before, during or after desorption treatment.

11. The method according to claim 1 or 2, characterised in that the taste-improving substance is krausen.

12. The method according to claim 11, characterised in that the krausen is added to the beer after desorption treatment.

13. The method according to claim 1 or 2, characterised in that the taste-improving substances are used in an amount that increases the extract content of the beer by 0.3 to 2.0 % by weight.

14. The method according to claim 1 or 2, characterised in that the desorption of the alcohol is carried out using a steam-saturated gas.

15. The method according to claim 1 or 2, characterised in that after removing the alcohol desorbed from the beer, the gas used to desorb the alcohol is recirculated for the treatment of the beer.

16. The method according to claim 1 or 2, characterised in that the desorption of the alcohol is carried out continuously.

17. The method according to claim 14, characterised in that the continuous desorption of the alcohol is carried out in a sieve plate column.

18. The method according to claim 2, characterised in that a storage beer is used, which beer contains a residual amount of the yeast used in the fermenting process.

19. The method according to claim 18, characterised in that the low-alcohol or alcohol-free beer obtained is stored in a cool place for two to four days.

**Revendications**

1. Procédé de production de bières à faible teneur en alcool ou non-alcoolisées, caractérisé en ce que, pour la désorption de l'acool, on fait passer un gaz à travers une bière alcoolisée et en ce que l'on compense la perte de goût de la bière qui en résulte par des produits qui améliorent le goût de la bière, lesdits produits étant soit présents dans la bière sous forme d'une teneur résiduelle en substances fermentescibles lors de l'utilisation d'une bière jeune partiellement fermentée, soit introduits dans la bière sous forme de moûts de bière, de sédiments ou de sucre lors de l'utilisation d'une bière totalement fermentée.

2. Procédé de production de bières à faible teneur en alcool ou non-alcoolisées, caractérisé en ce que, pour la désorption de l'alcool, on fait passer un gaz contenant de l'oxygène à travers une bière alcoolisée contenant une levure et en ce que l'on compense la perte de goût de la bière qui en résulte par des produits qui améliorent le goût de la bière, lesdits produits étant soit présents dans la bière sous forme d'une teneur résiduelle en substances fermentescibles lors de l'utilisation d'une bière jeune partiellement fermentée, soit introduits dans la bière sous forme de moûts de bière, de sédiments ou de sucre lors de l'utilisation d'une bière totalement fermentée, la levure produisant outre une dégradation supplémentaire de l'alcool, une transformation des substances fermentescibles en arômes caractéristiques de la bière.

3. Procédé selon la revendication 1, caractérisé en ce que l'on utilise comme gaz, l'air ou un gaz inerte.

4. Procédé selon la revendication 3, caractérisé en ce que l'on utilise du dioxyde de carbone comme gaz inerte.

5. Procédé selon la revendication 2, caractérisé en ce que l'on utilise l'air comme gaz contenant de l'oxygène.

**6.** Procédé selon l'une des revendications 1 ou 2, caractérisé en ce que l'on effectue la désorption de l'alcool à une température de 15 à 50°C.

**7.** Procédé selon l'une des revendications 1 ou 2, caractérisé en ce que l'on fait passer le gaz à travers la bière alcoolisée pendant 45 à 180 minutes lors d'un traitement en discontinu, pendant 5 à 20 minutes lors d'un traitement en continu.

**8.** Procédé selon l'une des revendications 1 ou 2, caractérisé en ce que l'on soumet au traitement aérobie, une bière ayant une teneur en substances fermentescibles de 0,25 à 1,80% en poids.

**9.** Procédé selon la revendication 8, caractérisé en ce que, dans le cas d'une bière contenant une levure, on effectue le traitement aérobie jusqu'à une teneur résiduelle en substances fermentescibles de 1,2 à 1,75% en poids.

**10.** Procédé selon l'une des revendications 1 ou 2, caractérisé en ce que l'on ajoute les produits améliorant le goût à la bière avant, pendant ou après le traitement de désorption.

**11.** Procédé selon l'une des revendications 1 ou 2, caractérisé en ce que l'on utilise des sédiments comme produit pour améliorer le goût.

**12.** Procédé selon la revendication 11, caractérisé en ce que l'on ajoute les sédiments à la bière après le traitement de désorption.

**13.** Procédé selon l'une des revendications 1 ou 2, caractérisé en ce que l'on utilise une quantité de produits améliorant le goût telle qu'elle conduise à une augmentation de la teneur en extrait de la bière de 0,3 à 2,0% en poids.

**14.** Procédé selon l'une des revendications 1 ou 2, caractérisé en ce que l'on effectue la désorption de l'alcool à l'aide d'un gaz saturé en vapeur d'eau.

**15.** Procédé selon l'une des revendications 1 ou 2, caractérisé en ce que l'on recycle dans le circuit de traitement de la bière le gaz utilisé pour la désorption de l'alcool, après séparation de l'alcool désorbé de la bière.

**16.** Procédé selon l'une des revendications 1 ou 2, caractérisé en ce que l'on effectue la désorption de l'alcool en continu.

**17.** Procédé selon la revendication 14, caractérisé en ce que l'on effectue la désorption en continu de l'alcool dans une colonne à plateaux à tamis.

**18.** Procédé selon la revendication 2, caractérisé en ce que l'on utilise une bière de garde qui contient une quantité résiduelle de la levure utilisée dans le procédé de fermentation.

**19.** Procédé selon la revendication 18, caractérisé en ce que l'on conserve la bière à faible teneur en alcool ou non alcoolisée obtenue dans un endroit frais pendant 2 à 4 jours.